# EUROPÄISCHE PATENTSCHRIFT

(11) **EP 2 640 785 B1**
(45) Veröffentlichungstag und Bekanntmachung des Hinweises auf die Patenterteilung: **01.11.2017**
(21) Anmeldenummer: 11781547.2
(22) Anmeldetag: 11.11.2011
(51) Int. Cl.: C08L 83/04, B60C 1/00, C08F 8/00, C08L 9/00, C08L 9/06, C08L 101/10

(54) **TRIALKYLSILYLOXY-TERMINIERTE POLYMERE**
TRIALKYLSILYLOXY-TERMINATED POLYMERS
POLYMÈRES TRIALKYLSILYLOXYTERMINÉS

(30) Priorität: 16.11.2010 EP 10191344
(43) Veröffentlichungstag der Anmeldung: 25.09.2013
(73) Patentinhaber: ARLANXEO Deutschland GmbH, 41540 Dormagen (DE)
(72) Erfinder: STEINHAUSER, Norbert, 40789 Monheim (DE)
(74) Vertreter: Wichmann, Birgid
(86) Internationale Anmeldenummer: PCT/EP2011/069910
(87) Internationale Veröffentlichungsnummer: WO 2012/065907

(56) Entgegenhaltungen:
- GB-A- 1 004 545
- US-A- 5 965 681
- US-A1- 2005 075 463
- MIEKO TOHYAMA ET AL: "SYNTHESIS OF END-FUNCTIONALIZED POLYMER BY MEANS OF LIVING ANIONIC POLYMERIZATION, 5. DYNTHSES OF POLYSTYRENES AND POLYISOPRENES WITH HYDROXY AND MERCAPTO END GROUPS BY REACTIONS OF THE LIVING POLYMERS WITH HALOALKANES CONTAINING SILYL ETHER AND SILYL THIOETHER FUNCTIONS", MACROMOLECULAR CHEMISTRY AND PHYSICS, WILEY-VCH VERLAG, WEINHEIM, DE, Bd. 197, Nr. 10, 1. Oktober 1996 (1996-10-01), Seiten 3135-3148, XP000634275, ISSN: 1022-1352, DOI: DOI:10.1002/MACP.1996.021971007 in der Anmeldung erwähnt
- HAHN, W. ET AL.: "Organosiliciumperoxyde als Initiatoren", MAKROMOLEKULARE CHEMIE, Bd. 21, 1956, Seiten 113-120, XP002621406,
- L. CAMICI ET AL.: "Synthesis of Trimethylsilyloxy and Hydroxy Compounds from Carbanions and Bis(trimethylsilyl)peroxide", TETRAHEDRON, Bd. 44, Nr. 13, 1988, Seiten 4197-4206, XP002672271,
- G.K. SURYA PRAKASH ET AL.: "Electrophilic Modification of Polystyrene Nanospheres", J. NANOSCI. NANOTECH., Bd. 5, Nr. 3, 2005, Seiten 397-403, XP009144304,

## Beschreibung

Die Erfindung betrifft ein Verfahren zur Herstellung von Endgruppen funktionalisierten Polymeren. Bei Reifenlaufflächen werden als wichtige Eigenschaften eine gute Haftung auf trockener und nasser Oberfläche, ein geringer Rollwiderstand sowie ein hoher Abriebwiderstand angestrebt. Dabei ist es sehr schwer, die Rutschfestigkeit eines Reifens zu verbessern, ohne gleichzeitig den Rollwiderstand und die Abriebbeständigkeit zu verschlechtern. Ein niedriger Rollwiderstand ist für einen niedrigen Kraftstoffverbrauch von Bedeutung, und eine hohe Abriebbeständigkeit ist der entscheidende Faktor für eine hohe Lebensdauer des Reifens.

Nassrutschfestigkeit und Rollwiderstand einer Reifenlauffläche hängen zum großen Teil von den dynamisch-mechanischen Eigenschaften der Kautschuke ab, die bei der Mischungsherstellung verwendet werden. Zur Erniedrigung des Rollwiderstands werden für die Reifenlauffläche Kautschuke mit einer hohen Rückprallelastizität bei höheren Temperaturen (60°C bis 100°C) eingesetzt. Andererseits sind zur Verbesserung der Nassrutschfestigkeit Kautschuke mit einem hohen Dämpfungsfaktor bei niedrigen Temperaturen (0 bis 23°C) bzw. niedriger Rückprallelastizität im Bereich 0°C bis 23°C von Vorteil. Um dieses komplexe Anforderungsprofil zu erfüllen, werden Mischungen aus verschiedenen Kautschuken in der Lauffläche eingesetzt. Für gewöhnlich werden Mischungen aus einem oder mehreren Kautschuken mit einer relativ hohen Glasübergangstemperatur, wie Styrol-Butadien-Kautschuk, und einem oder mehreren Kautschuken mit relativ niedriger Glasübergangstemperatur, wie Polybutadien mit einem hohen 1,4-cis-Gehalt bzw. einem Styrol-Butadien-Kautschuk mit niedrigem Styrol- und geringem Vinylgehalt oder einem in Lösung hergestellten Polybutadien mit mittlerem 1,4-cis- und niedrigem Vinylgehalt verwendet.

Doppelbindungshaltige anionisch polymerisierte Lösungskautschuke, wie Lösungs-Polybutadien und Lösungs-Styrol-Butadien-Kautschuke, besitzen gegenüber entsprechenden Emulsionskautschuken Vorteile bei der Herstellung rollwiderstandsarmer Reifenlaufflächen. Die Vorteile liegen u.a. in der Steuerbarkeit des Vinylgehalts und der damit verbundenen Glasübergangstemperatur und der Molekülverzweigung. Hieraus ergeben sich in der praktischen Anwendung besondere Vorteile in der Relation von Nassrutschfestigkeit und Rollwiderstand des Reifens. Wesentliche Beiträge zur Energiedissipation und somit zum Rollwiderstand in Reifenlaufflächen resultieren aus freien Polymerkettenenden und aus dem reversiblen Auf- und Abbau des Füllstoffnetzwerks, welches der in der Reifenlaufflächenmischung eingesetzte Füllstoff (zumeist Kieselsäure und/oder Ruß) ausbildet.

Die Einführung funktioneller Gruppen an den Polymerkettenenden ermöglicht eine physikalische oder chemische Anbindung dieser Kettenenden an die Füllstoffoberfläche. Dadurch wird deren Beweglichkeit eingeschränkt und somit die Energiedissipation bei dynamischer Beanspruchung der Reifenlauffläche verringert. Gleichzeitig können diese funktionellen Endgruppen die Dispergierung des Füllstoffes in der Reifenlauffläche verbessern, was zu einer Schwächung des Füllstoffnetzwerkes und damit zu einer weiteren Absenkung des Rollwiderstandes führen kann.

Zu diesem Zweck sind zahlreiche Methoden zur Endgruppenmodifizierung entwickelt worden. Beispielsweise wird in der EP 0 180 141 A1 die Verwendung von 4,4'-Bis(dimethylamino)-benzophenon oder N-Methylcaprolactam als Funktionalisierungsreagenzien beschrieben. Auch die Verwendung von Ethylenoxid und N-Vinylyrrolidon ist aus EP 0 864 606 A1 bekannt. Eine Reihe weiterer möglicher Funktionalisierungsreagenzien sind in US 4,417,029 aufgeführt.

Insbesondere Silane mit in der Summe mindestens zwei Halogen- und/oder Alkyloxy- und/oder Aryloxysubstituenten an Silicium eignen sich gut zur Endgruppenfunktionalisierung von Dienkautschuken, da einer der genannten Substituenten am Si-Atom leicht durch ein anionisches Dienpolymerkettenende ausgetauscht werden kann und der bzw. die weiteren der zuvor genannten Substituenten an Si als funktionelle Gruppe zur Verfügung steht, welche, gegebenenfalls nach Hydrolyse, mit dem Füllstoff der Reifenlaufflächenmischung wechselwirken kann. Beispiele für derartige Silane finden sich in US 3,244,664, US 4,185,042, EP 0 890 580 A1.

Viele der genannten Funktionalisierungsreagenzien weisen jedoch Nachteile auf, wie z.B. schlechte Löslichkeit im Prozesslösungsmittel, hohe Toxizität oder hohe Flüchtigkeit, was zur Kontamination des rückgeführten Lösungsmittels führen kann. Darüberhinaus können viele dieser Funktionalisierungsreagenzien mit mehr als einem anionischen Polymerkettenende reagieren, was zu oft störenden und schwer zu kontrollierenden Kopplungsreaktionen führt. Dies gilt v.a. für die genannten Silane. Diese haben außerdem den weiteren Nachteil, dass bei Reaktion dieser Silane mit dem anionischen Polymerkettenende Komponenten wie Halogenide oder Alkoxygruppen abgespalten werden, wobei letztere leicht zu Alkoholen umgesetzt werden. Halogenide begünstigen die Korrosion; Alkohole können zur Verunreinigung des Prozesslösungsmittels führen. Ein weiterer Nachteil bei der Verwendung von Silanen als Funktionalisierungsreagenzien besteht darin, dass die daraus erhaltenen Siloxan terminierten Polymere nach der Funktionalisierung über die Si-OR-Gruppen an den Polymerkettenenden (bzw über die Si-OH-Gruppen nach Hydrolyse der Si-OR-Gruppen) unter Ausbildung von Si-O-Si-Bindungen koppeln können, was zu einem unerwünschten Viskositätsanstieg der Kautschuke während der Aufarbeitung und Lagerung führt. Es wurden viele Methoden zur Verringerung dieses Viskositätsanstiegs bei Siloxan terminierten Polymeren beschrieben, wie der Zusatz von stabilisierenden Reagenzien auf Basis von Säure und Säurehalogeniden (EP 0 801 078 A1), Zusatz von Siloxan (EP 1 198 506 B1), Zusatz von langkettigen Alkoholen (EP 1 237 934 B1) oder Zusatz von Reagenzien zur Kontrolle des pH-Wertes (EP 1 726 598).

Hydroxyterminierte Polymere, bei denen die OH-Gruppe nicht an Si sondern an C gebunden ist, besitzen den Vorteil, dass die oben beschriebene Kopplungsreaktion unter Ausbildung von Si-O-Si-Bindungen nicht auftritt. Es sind verschiedene Methoden zur Einführung solcher an C gebundener OH-Gruppen beschrieben, wie z.B. die Verwendung von Ethylenoxid als Funktionalisierungsreagenz. Ethylenoxid weist jedoch den Nachteil der hohen Flüchtigkeit und der starken Toxizität auf. Andere Methoden, wie die Verwendung von Ketonen, besitzen den Nachteil, dass neben der gewünschten Umsetzung zum hydroxyterminierten Polymer zahlreiche Nebenreaktionen ablaufen können. Dagegen reagieren tert-Butyldimethylsilylether von ω-Halo-1-alkanolen, wie 3-(tert-Butyldimethylsilyloxy)-1-chlorpropan, unter Substitution des Halogenatoms quantitiativ mit den anionischen Polymerkettenenden von Polydienen und Polyvinylaromaten (beschrieben z.B. in US 5,965,681 sowie in M. Tohyama, A. Hirao, S. Nakahama, Macromol. Chem. Phys. 1996, 197, 3135-3148) Zudem beschreibt GB 1,004,545 die radikalische Herstellung von Styrol(co)polymeren (z.B. ein Butadien-Styrol-Copolymer) mit t-Butyl-peroxytrimethylsilan als Starter. Die entsprechenden tert-Butyldimethylsilyloxy-terminierten Polymere lassen sich in einem nachfolgenden Hydrolyseschritt zu hydroxyterminierten Polymeren umsetzen. Nachteilig bei dieser Art der Funktionalisierung ist, dass die tert-Butyldimethylsilyl-Gruppe eine große sterische Abschirmung aufweist und somit die Hydrolyse der tert-Butyldimethylsilyloxy-Gruppe zur OH-Gruppe drastische Bedingungen, wie lange Reaktionszeit und niedrigen pH-Wert, erfordert. Schutzgruppen, wie Trimethylsilyl, die eine geringere sterische Abschirmung aufweisen und eine einfachere Hydrolyse ermöglichen, lassen sich für diese Art der Funktionalisierung nicht verwenden, da wegen der geringeren sterischen Abschirmung ein Angriff der anionischen Polymerkettenenden an Si stattfindet.

Es bestand daher die Aufgabe, ein Verfahren zur Herstellung von Endgruppen funktionalisierte Polymere bereitzustellen, die die Nachteile des Standes der Technik nicht aufweisen.

Zur Lösung dieser Aufgabe wird ein Verfahren zur Herstellung von Endgruppen funktionalisierte Polymere vorgeschlagen, welche am Polymerkettenende eine Trialkylsilyloxy-Gruppe der Formel (I) 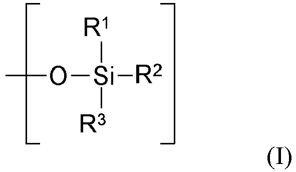 aufweisen, wobei R¹, R², R³ gleich oder verschieden sein können und Alkyl-, Cycloalkyl- und Aralkylreste darstellen, die Heteroatome wie O, N, S, Si enthalten können.

Bevorzugt sind alle Reste R gleich und bestehen aus n-Alkylsubstituenten, besonders bevorzugt sind Methylgruppen.

Bevorzugt weisen die erfindungsgemäßen Endgruppen funktionalisierten Polymere HydroxyEndgruppen (OH-Endgruppen) auf, wobei diese durch Hydrolyse der erfindungsgemäßen Endgruppen funktionalisierten Polymere mit Endgruppen gemäß Formel (I) hergestellt werden.

Polymere zur Herstellung der erfindungsgemäßen Endgruppen funktionalisierten Polymere sind Dienpolymere und durch Copolymerisation von Dienen mit vinylaromatischen Monomeren erhältliche Dien-Copolymere, dadurch gekennzeichnet, dass das Dienpolymer ein Polybutadien, ein Butadien-Isopren-Copolymer, ein Butadien-Styrol-Copolymer, ein Isopren-Styrol-Copolymer oder ein Butadien-Isopren-Styrol-Terpolymer ist. Die Herstellung dieser Polymere erfolgt bevorzugt durch anionische Lösungspolymerisation oder durch Polymerisation mittels Koordinationskatalysatoren. Unter Koordinationskatalysatoren sind in diesem Zusammenhang Ziegler-Natta-Katalysatoren oder monometallische Katalysatorsysteme zu verstehen. Bevorzugte Koordinationskatalysatoren sind solche auf Basis Ni, Co, Ti, Zr, Nd, V, Cr, Mo, W oder Fe.

Initiatoren für die anionische Lösungspolymerisation sind solche auf Alkali- oder Erdalkalimetallbasis, wie z.B. Methyllithium, Ethyllithium, Isopropyllithium, *n*-Butyllithium, *sec-*Butyllithium, Pentyllithium, *n*-Hexyllithium, Cyclohexyllithium, Octyllithium, Decyllithium, 2-(6-Lithio-*n*-hexoxy)tetrahydropyran, 3-(*tert*-Butyldimethylsiloxy)-1-propyllithium, Phenyllithium, 4-Butylphenyllithium, 1-Naphthyllithium, p-Toluyllithium, Lithiumamide sekundärer Amine wie Lithiumpyrrolidid, Lithiumpiperidid, Lithiumhexamethylenimid, Lithiumdiphenylamid. Diese Lithiumamide können auch *in situ* durch Reaktion einer Organolithiumverbindung mit sekundären Aminen hergestellt werden. Des Weiteren können auch di- und polyfunktionelle Organolithiumverbindungen eingesetzt werden, wie z.B. 1,4-Dilithiobutan, Dilithiumpiperazid. Bevorzugt werden *n*-Butyllithium und *sec*-Butyllithium eingesetzt.

Zusätzlich können die bekannten Randomizer und Kontrollagenzien für die Mikrostruktur des Polymers verwendet werden, wie z.B. Diethylether, Di-*n*-propylether, Diisopropylether, Di-*n-*butylether, Ethylenglykoldimethylether, Ethylenglykoldiethylether, Ethylengykoldi-*n*-butylether, Ethylengykoldi-*tert*-butylether, Diethylenglykoldimethylether, Diethylenglykoldiethylether, Diethylenglykoldi-*n*-butylether, Diethylenglykoldi-*tert*-butylether, 2-(2-Ethoxyethoxy)-2-methyl-propan, Triethylenglykoldimethylether, Tetrahydrofuran, Ethyltetrahydrofurfurylether, Hexyltetrahydrofurfurylether 2,2-Bis(2-tetrahydrofuryl)propan, Dioxan, Trimethylamin, Triethylamin, N,N,N',N'-Tetramethylethylendiamin, N-Methylmorpholin, N-Ethylmorpholin, 1,2-Dipiperidinoethan, 1,2-Dipyrrolidinoethan, 1,2-Dimorpholinoethan sowie Kalium- und Natriumsalze von Alkoholen, Phenolen, Carbonsäuren, Sulfonsäuren.

Derartige Lösungspolymerisationen sind bekannt und z.B. in I. Franta, Elastomers and Rubber Compounding Materials; Elsevier 1989, Seite 113 - 131, in Houben-Weyl, Methoden der Organischen Chemie, Thieme Verlag, Stuttgart, 1961, Band XIV/1 Seiten 645 bis 673 oder im Band E 20 (1987), Seiten 114 bis 134 und Seiten 134 bis 153 sowie in Comprehensive Polymer Science, Vol. 4, Part II (Pergamon Press Ltd., Oxford 1989), Seiten 53-108 beschrieben.

Die Herstellung der bevorzugten Dienhomo- und Diencopolymere findet vorzugsweise in einem Lösungsmittel statt. Als Lösungsmittel für die Polymerisation werden vorzugsweise inerte aprotische Lösungsmittel, wie z.B. paraffinische Kohlenwasserstoffe, wie isomere Butane, Pentane, Hexane, Heptane, Octane, Decane, Cyclopentan, Cyclohexan, Methylcyclohexan, Ethylcyclohexan oder 1,4-Dimethylcyclohexan oder aromatische Kohlenwasserstoffe, wie Benzol, Toluol, Ethylbenzol, Xylol, Diethylbenzol oder Propylbenzol eingesetzt. Diese Lösungsmittel können einzeln oder in Kombination verwendet werden. Bevorzugt sind Cyclohexan und n-Hexan. Ebenfalls möglich ist die Abmischung mit polaren Lösungsmitteln.

Die Menge an Lösungsmittel beträgt bei dem erfindungsgemäßen Verfahren üblicherweise 100 bis 1000 g, bevorzugt 200 bis 700 g, bezogen auf 100 g der gesamten Menge an eingesetztem Monomer. Es ist aber auch möglich, die eingesetzten Monomere in Abwesenheit von Lösungsmitteln zu polymerisieren.

Die Polymerisation kann in der Weise durchgeführt werden, dass zuerst die Monomere und das Lösungsmittel vorgelegt werden und dann die Polymerisation durch Zugabe des Initiators oder Katalysators gestartet wird. Es ist auch möglich in einem Zulaufverfahren zu polymerisieren, bei dem der Polymerisationsreaktor durch Zugabe von Monomeren und Lösungsmittel befüllt wird, wobei der Initiator oder Katalysator vorgelegt wird oder mit den Monomeren und dem Lösungsmittel zugegeben wird. Variationen, wie Vorlegen des Lösungsmittels im Reaktor, Zugabe des Initiators oder Katalysators und dann Zugabe der Monomere sind möglich. Weiterhin kann die Polymerisation in einer kontinuierlichen Fahrweise betrieben werden. Weitere Monomer- und Lösungsmittelzugabe während oder am Ende der Polymerisation ist in allen Fällen möglich.

Die Polymerisationszeit kann in breiten Bereichen von einigen Minuten bis zu einigen Stunden schwanken. Üblicherweise wird die Polymerisation innerhalb einer Zeitspanne von etwa 10 Minuten bis zu 8 Stunden, bevorzugt 20 Minuten bis 4 Stunden, durchgeführt. Sie kann sowohl bei Normaldruck als auch bei erhöhtem Druck (1 bis 10 bar) durchgeführt werden.

Es wurde überraschend festgestellt, dass durch die Verwendung von einem oder mehreren Bis(trialkylsilyl)peroxiden als Funktionalisierungsreagenzien Endgruppen funktionalisierte Polymere hergestellt werden können, welche die Nachteile des Standes der Technik nicht aufweisen. Insbesondere können auf diese Weise sterisch wenig abgeschirmte und leicht zu hydrolysierende Trialkylsilyloxy-Gruppen, wie Trimethylsilyloxy, am Polymerkettenende eingeführt werden.

Bei den Bis(trialkylsilyl)peroxiden handelt es sich um Verbindungen der allgemeinen Formel (II) 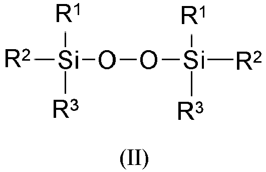 wobei
- R¹, R², R³: gleich oder verschieden sein können und Alkyl-, Cycloalkyl- und Aralkylreste darstellen, die Heteroatome wie O, N, S, Si enthalten können.

Bevorzugt sind alle Reste R gleich und bestehen aus n-Alkylsubstituenten, besonders bevorzugt ist Methyl.

Somit ist auch die Verwendung von Bis(trialkylsilyl)peroxiden als Funktionalisierungsreagenzien zur Herstellung der erfindungsgemäßen Endgruppen funktionalisierten Polymere mit Endgruppen der Formel (I) oder mit Hydroxyendgruppen Gegenstand der Erfindung.

Die erfindungsgemäßen Polymere weisen vorzugsweise mittlere Molgewichte (Zahlenmittel) von 10000 bis 2000000 g/mol, bevorzugt 100000 bis 1000 000 g/mol und Glasübergangstemperaturen von -110°C bis +20°C, bevorzugt -110°C bis 0°C, sowie Mooney-Viskositäten ML 1+4 (100°C) von 10 bis 200, vorzugsweise 30 bis 150 Mooney-Einheiten auf.

Ein weiterer Gegenstand der Erfindung ist ein Verfahren zur Herstellung der erfindungsgemäßen Endgruppen funktionalisierten Polymere, wonach eine oder mehrere Verbindungen der Formel (II), als Reinstoff, Lösung oder Suspension, zu Polymeren mit reaktiven Polymerkettenenden gegeben werden. Die Zugabe erfolgt bevorzugt nach Abschluss der Polymerisation; sie kann aber auch vor vollständigem Monomerumsatz erfolgen. Die Reaktion von Verbindungen der Formel (II) mit Polymeren mit reaktiven Polymerkettenenden erfolgt bei den üblicherweise für die Polymerisation verwendeten Temperaturen. Die Reaktionszeiten für die Umsetzung von Verbindungen der Formel (II), mit den reaktiven Polymerkettenenden kann zwischen einigen Minuten bis mehreren Stunden liegen.

Die Menge dieser Verbindungen kann so gewählt werden, dass alle reaktiven Polymerkettenenden mit Komponenten der Fomel (II) reagieren, oder es kann ein Unterschuss dieser Verbindungen eingesetzt werden. Die eingesetzten Mengen der Verbindungen nach Formel (II) können einen weiten Bereich abdecken. Die bevorzugten Mengen liegen zwischen 0,005 - 2 Gew.-%, besonders bevorzugt zwischen 0,01 - 1 Gew.-%, bezogen auf die Menge an Polymer.

Zusätzlich zu Verbindungen nach Formel (II) können auch die für die anionische Dien-polymerisation typischen Kopplungsreagenzien zur Reaktion mit den reaktiven Polymerkettenenden eingesetzt werden. Beispiele für solche Kopplungsreagenzien sind Siliciumtetrachlorid, Methyltrichlorsilan, Dimethyldichlorsilan, Zinntetrachlorid, Dibutylzinndichlorid, Tetraalkoxysilane, Ethylenglykoldiglycidylether, 1,2,4-Tris(chlormethyl)benzol. Solche Kopplungsreagenzien können vor den Verbindungen der Formel (II) zugesetzt werden, zusammen mit diesen oder nach diesen.

Nach Zugabe von Verbindungen der Formel (II) kann vor, während oder nach der Aufarbeitung der Polymere ein Hydrolyseschritt zur Abspaltung der Trialkylsilyl-Gruppen an den Polymerkettenenden stattfinden, wobei die entsprechenden hydroxyterminierten Polymere erhalten werden. Die Abspaltung der Trialkylsilyl-Gruppe kann z.B. durch Zugabe von Mineralsäuren oder durch Zugabe von Fluoriden zur Polymerlösung erfolgen. Weitere Methoden sind in T. W. Greene, P. G. M. Wuts, Protective Groups in Organic Synthesis, 2nd Edition 1991, Wiley, New York, beschrieben.

Nach erfolgter Zugabe von Komponenten der Formel (II) und gegebenenfalls von Kopplungsreagenzien werden vor oder während der Aufarbeitung der trialkylsilyloxy-terminierten Polymere oder der hydroxyterminierten Polymere bevorzugt die üblichen Alterungsschutzmittel, wie sterisch gehinderte Phenole, aromatische Amine, Phosphite, Thioether, zugesetzt. Weiterhin können die üblichen, für Dienkautschuke verwendeten Strecköle, wie DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenische und schwere naphthenische Öle zugegeben werden. Auch die Zugabe von Füllstoffen, wie Ruß und Kieselsäure, Kautschuken und Kautschukhilfsmitteln ist möglich.

Die Entfernung des Lösungsmittels aus dem Polymerisationsprozess kann nach den üblichen Verfahren, wie Destillation, Strippen mit Wasserdampf oder Anlegen eines Vakuums, gegebenenfalls bei höherer Temperatur, erfolgen. Diese Beschreibung offenbart zudem die Verwendung der erfindungsgemäßen Endgruppen funktionalisierten Polymere, nämlich die erfindungsgemäßen trialkylsilyloxy-terminierten Polymere oder die daraus hergestellten hydroxyterminierten Polymere, zur Herstellung von vulkanisierbaren Kautschukzusammensetzungen.

Vorzugsweise weisen diese vulkanisierbaren Kautschukzusammensetzungen weitere Kautschuke, Füllstoffe, Kautschukchemikalien, Verarbeitungshilfsmittel und Strecköle auf.

Zusätzliche Kautschuke sind beispielsweise Naturkautschuk sowie Synthesekautschuke. Sofern vorhanden liegt deren Menge üblicherweise im Bereich von 0,5 bis 95, bevorzugt 10 bis 80 Gew.-%, bezogen auf die gesamte Polymermenge in der Mischung. Die Menge an zusätzlich zugegebenen Kautschuken richtet sich wieder nach dem jeweiligen Verwendungszweck der erfindungsgemäßen Mischungen.

Exemplarisch sind hier literaturbekannte Synthesekautschuke aufgeführt. Sie umfassen u. a.
- BR -: Polybutadien
- ABR -: Butadien/Acrylsäure-C₁-C₄-Alkylester-Copolymere
- IR -: Polyisopren
- E-SBR -: Styrol-Butadien-Copolymerisate mit Styrolgehalten von 1-60, vorzugsweise 20-50 Gew.-%, hergestellt durch Emulsionspolymerisation
- S-SBR -: Styrol-Butadien-Copolymerisate mit Styrolgehalten von 1-60, vorzugsweise 15-45 Gew.%, hergestellt durch Lösungspolymerisation
- IIR -: Isobutylen-Isopren-Copolymerisate
- NBR -: Butadien-Acrylnitril-Copolymere mit Acrylnitrilgehalten von 5-60, vorzugsweise 10-40 Gew.%
- HNBR -: teilhydrierter oder vollständig hydrierter NBR-Kautschuk
- EPDM -: Ethylen-Propylen-Dien-Terpolymerisate
sowie Mischungen dieser Kautschuke. Für die Herstellung von Kfz-Reifen sind insbesondere Naturkautschuk, E-SBR sowie S-SBR mit einer Glastemperatur oberhalb von -60°C, Polybutadienkautschuk mit hohem cis-Gehalt (> 90 %), der mit Katalysatoren auf Basis Ni, Co, Ti oder Nd hergestellt wurde, sowie Polybutadienkautschuk mit einem Vinylgehalt von bis zu 80 % sowie deren Mischungen von Interesse.

Als Füllstoffe kommen für die erfindungsgemäßen Kautschukzusammensetzungen alle bekannten in der Kautschukindustrie verwendeten Füllstoffe in Betracht. Diese umfassen sowohl aktive als auch inaktive Füllstoffe.

Zu erwähnen sind beispielhaft:
- hochdisperse Kieselsäuren, hergestellt z.B. durch Fällung von Lösungen von Silikaten oder Flammenhydrolyse von Siliciumhalogeniden mit spezifischen Oberflächen von 5-1000, vorzugsweise 20-400 m²/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-, Ti-Oxiden vorliegen;

- synthetische Silikate, wie Aluminiumsilikat, Erdalkalisilikat wie Magnesiumsilikat oder Calciumsilikat, mit BET-Oberflächen von 20-400 m²/g und Primärteilchendurchmessern von 10-400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Metallsulfate, wie Calciumsulfat, Bariumsulfat;
- Ruße: Die hierbei zu verwendenden Ruße sind nach dem Flammruß-, dem Channel-, Furnace-, Gasruß-, Thermal-, Acetylenruß- oder Lichtbogenverfahren hergestellte Ruße und besitzen BET-Oberflächen von 9 - 200 m²/g, z.B. SAF-, ISAF-LS-, ISAF-HM-, ISAF-LM-, ISAF-HS-, CF-, SCF-, HAF-LS-, HAF-, HAF-HS-, FF-HS-, SPF-, XCF-, FEF-LS-, FEF-, FEF-HS-, GPF-HS-, GPF-, APF-, SRF-LS-, SRF-LM-, SRF-HS-, SRF-HM- und MT-Ruße bzw. nach ASTM N110-, N219-, N220-, N231-, N234-, N242-, N294-, N 326-, N327-, N330-, N332-, N339-, N347-, N351-, N356-, N358-, N375-, N472-, N539-, N550-, N568-, N650-, N660-, N754-, N762-, N765-, N774-, N787- und N990-Ruße.
- Kautschukgele, insbesondere solche auf Basis von BR, E-SBR und/oder Polychloropren mit Teilchengrößen von 5 bis 1000 nm.

Bevorzugt werden als Füllstoffe hochdisperse Kieselsäuren und/oder Ruße eingesetzt.

Die genannten Füllstoffe können alleine oder im Gemisch eingesetzt werden. In einer besonders bevorzugten Ausführungsform enthalten die Kautschukzusammensetzungen als Füllstoffe ein Gemisch aus hellen Füllstoffen, wie hochdispersen Kieselsäuren, und Rußen, wobei das Mischungsverhältnis von hellen Füllstoffen zu Rußen bei 0,01 :1 bis 50:1 bevorzugt 0,05:1 bis 20:1 liegt.

Die Füllstoffe werden hierbei in Mengen im Bereich von 10 bis 500 Gewichtsteilen bezogen auf 100 Gewichtsteile Kautschuk eingesetzt. Bevorzugt werden 20 bis 200 Gewichtsteile eingesetzt. Die Kautschukzusammensetzungen enthalten noch Kautschukhilfsmittel, die beispielsweise die Verarbeitungseigenschaften der Kautschukzusammensetzungen verbessern, der Vernetzung der Kautschukzusammensetzungen dienen, die physikalischen Eigenschaften der aus den erfindungsgemäßen Kautschukzusammensetzungen hergestellten Vulkanisate für deren speziellen Einsatzzweck verbessern, die Wechselwirkung zwischen Kautschuk und Füllstoff verbessern oder zur Anbindung des Kautschuks an den Füllstoff dienen.

Kautschukhilfsmittel sind z.B. Vernetzeragentien, wie z.B. Schwefel oder Schwefel liefernde Verbindungen, sowie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Silane, Verzögerer, Metalloxide, Strecköle, wie z.B. DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenische und schwere naphthenische Öle sowie Aktivatoren. Die gesamte Menge an Kautschukhilfsmitteln liegt im Bereich von 1 bis 300 Gewichtsteilen, bezogen auf 100 Gewichtsteile an Gesamtkautschuk. Bevorzugt werden 5 bis 150 Gewichtsteile an Kautschukhilfsmitteln eingesetzt. Diese Beschreibung offenbart zudem ein Verfahren zur Herstellung der erfindungsgemäßen Kautschukzusammensetzungen, wonach mindestens ein erfindungsgemäßes trialkylsilyloxy-terminiertes Polymer oder ein daraus hergestelltes hydroxyterminiertes Polymer mit gegebenenfalls weiteren Kautschuken, Füllstoffen und Kautschukhilfsmitteln in den vorgenannten Mengen in einer Mischapparatur bei Temperaturen von 20 - 220°C vermischt werden.

Die Herstellung der vulkanisierbaren Kautschukzusammensetzungen kann in einem einstufigen oder in einem mehrstufigen Verfahren erfolgen, wobei 2 bis 3 Mischstufen bevorzugt sind. So kann z.B. die Zugabe von Schwefel und Beschleuniger in einer separaten Mischstufe z.B. auf einer Walze erfolgen, wobei Temperaturen im Bereich 30°C bis 90°C bevorzugt sind. Bevorzugt erfolgt die Zugabe von Schwefel und Beschleuniger in der letzen Mischstufe.

Für die Herstellung der vulkanisierbaren Kautschukzusammensetzungen geeignete Aggregate sind beispielsweise Walzen, Kneter, Innenmischer oder Mischextruder.

Somit sind vulkanisierbare Kautschukzusammensetzungen enthaltend Endgruppen funktionalisierte Polymere mit Endgruppen der Formel (I) oder daraus hergestellten Hydroxyendgruppen ein weiterer Gegenstand der Erfindung Diese Beschreibung offenbart zudem die Verwendung der erfindungsgemäßen vulkanisierbaren Kautschukzusammensetzungen zur Herstellung von Kautschukvulkanisaten, vor allem für die Herstellung von Reifen, insbesondere Reifenlaufflächen, die einen besonders geringen Rollwiderstand bei hoher Nassrutschfestigkeit und Abriebbeständigkeit aufweisen.

Die vulkanisierbaren Kautschukzusammensetzungen eignen sich auch zur Herstellung von Formkörpern, z.B. für die Herstellung von Kabelmänteln, Schläuchen, Treibriemen, Förderbändern, Walzenbelägen, Schuhsohlen, Dichtungsringen und Dämpfungselementen.

Die nachfolgenden Beispiele dienen der Erläuterung der Erfindung, ohne dabei limitierend zu wirken.

### Beispiele

### Beispiel 1a: Synthese von Styrol-Butadien-Copolymer (Vergleichsbeispiel)

Ein inertisierter 20L-Reaktor wurde mit 8,5 kg Hexan, 1125 g 1,3-Butadien, 375 g Styrol, 28 mmol 2,2-Bis(2-tetrahydrofuryl)propan sowie 10 mmol Butyllithium befüllt und der Inhalt auf 70°C erwärmt. Es wurde unter Rühren 1h bei 70°C polymerisiert. Anschließend wurde die Kautschuklösung abgelassen, durch Zugabe von 3 g Irganox® 1520 (2,4-Bis(octylthiomethyl)-6-methylphenol) stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 51,5 Gew.-%; Styrol-Gehalt (IR-spektroskopisch): 24,7 Gew.-%; Glasübergangstemperatur (DSC): -16°C; zahlenmittleres Molekulargewicht Mₙ (GPC, PS-Standard): 242 kg/mol; M_{w}/Mₙ: 1,30; Mooney-Viskosität (ML1+4 bei 100°C): 71 ME

### Beispiel 1b: Synthese von trialkylsilyloxy-terminiertem Styrol-Butadien-Copolymer (erfindungsgemäß)

Ein inertisierter 20L-Reaktor wurde mit 8,5 kg Hexan, 1125 g 1,3-Butadien, 375 g Styrol, 28 mmol 2,2-Bis(2-tetrahydrofuryl)propan sowie 10,5 mmol Butyllithium befüllt und der Inhalt auf 70°C erwärmt. Es wurde unter Rühren 1h bei 70°C polymerisiert. Danach wurden 11,6 mmol (2,07 g) Bis(trimethylsilyl)peroxid zugegeben und der Reaktorinhalt weitere 20 min auf 70°C erwärmt. Anschließend wurde die Kautschuklösung abgelassen, durch Zugabe von 3 g Irganox® 1520 stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 51,7 Gew.-%; Styrol-Gehalt (IR-spektroskopisch): 24,8 Gew.-%; Glasübergangstemperatur (DSC): -14°C; zahlenmittleres Molekulargewicht Mₙ (GPC, PS-Standard): 251 kg/mol; M_{w}/Mₙ: 1,31; Mooney-Viskosität (ML1+4 bei 100°C): 77 ME.

### Beispiele 2 a, b: Kautschukzusammensetzungen

Es wurden Reifenlaufflächenkautschukzusammensetzungen hergestellt, die das Styrol-Butadien-Copolymer aus Beispiel 1a als Vergleichsbeispiel (Kautschukzusammensetzung 2a), sowie das erfindungsgemäße trialkylsilyloxy-terminierte Styrol-Butadien-Copolymer aus Beispiel 1b (Kautschukzusammensetzung 2b) enthalten. Die Bestandteile sind in Tabelle 1 aufgelistet. Die Kautschukzusammensetzungen (ohne Schwefel und Beschleuniger) wurden in einem 1,5L-Kneter hergestellt. Die Bestandteile Schwefel und Beschleuniger wurden anschließend auf einer Walze bei 40°C zugemischt.

**Tabelle 1: Bestandteile der Reifenlaufflächenkautschukzusammensetzungen (Angaben in phr: Gewichtsteile pro 100 Gewichtsteile Kautschuk)**

| | **Vergleichsbeispiel 2a** | **Erfindungsgemäßes Beispiel 2b** |
|---|---|---|
| Styrol-Butadien-Copolymer aus Beispiel 1a | 70 | 0 |
| Trialkylsilyloxy-terminiertes Styrol-Butadien-Copolymer aus Beispiel 1b | 0 | 70 |
| hoch-cis-haltiges Polybutadien (BUNA™ CB 24 der Lanxess Deutschland | 30 | 30 |
| Kieselsäure (Ultrasil® 7000) | 90 | 90 |
| Ruß (Vulcan® J/N 375) | 7 | 7 |
| TDAE-Öl (Vivatec 500) | 36,3 | 36,3 |
| Verarbeitungshilfsmittel (Aflux 37) | 3 | 3 |
| Stearinsäure (Edenor C 18 98-100) | 1 | 1 |
| Alterungsschutzmittel (Vulkanox® 4020/LG der Lanxess Deutschland GmbH) | 2 | 2 |
| Alterungsschutzmittel (Vulkanox® HS/LG der Lanxess Deutschland GmbH) | 2 | 2 |
| Zinkoxid (Zinkweiß Rotsiegel) | 2 | 2 |
| Wachs (Antilux 654) | 2 | 2 |
| Silan (Si 69® von Evonik) | 7,2 | 7,2 |
| Diphenylguanidin (Vulkacit® D/C der Lanxess Deutschland GmbH) | 2,2 | 2,2 |
| Sulfenamid (Vulkacit® NZ/EGC der Lanxess Deutschland GmbH) | 1,6 | 1,6 |
| Schwefel (Mahlschwefel 90/95 Chancel) | 1,6 | 1,6 |
| Sulfonamid (Vulkalent® E/C) | 0,2 | 0,2 |

### Beispiele 3 a, b: Vulkanisateigenschaften

Die Reifenlaufflächenkautschukzusammensetzungen der Beispiele 2a und 2b nach Tabelle 1 wurden 20 Minuten bei 160°C vulkanisiert. Die Eigenschaften der entsprechenden Vulkanisate sind in Tabelle 2 als Beispiele 3a und 3b aufgeführt.

**Tabelle 2: Vulkanisateigenschaften**

| | **Vergleichsbeispiel 3a** | **Erfindungsgemäßes Beispiel 3b** |
|---|---|---|
| **Styrol-Butadien-Copolymer im Vulkanisat:** | | |
| Styrol-Butadien-Copolymer aus Beispiel 1a | X | |
| Trialkylsilyloxy-terminiertes Styrol-Butadien-Copolymer aus Beispiel 1b | | X |

| **Vulkanisateigenschaften:** | | |
|---|---|---|
| Rückprallelastizität bei 23°C [%] | 28 | 30,5 |
| Rückprallelastizität bei 60°C [%] | 50,5 | 53,5 |
| tan δ-Maximum (MTS-Amplitudensweep bei 1 Hz, 60°C) | 0,193 | 0,177 |
| tan δ bei 0°C (dynamische Dämpfung bei 10 Hz) | 0,291 | 0,321 |
| tan δ bei 60°C (dynamische Dämpfung bei 10 Hz) | 0,120 | 0,105 |
| Reißdehnung (S2-Probekörper) [%] | 428 | 448 |
| Reißspannung (S2-Probekörper) [MPa] | 18,3 | 20,1 |
| Abrieb (DIN 53516) [mm³] | 95 | 86 |

Für Reifenanwendungen wird ein niedriger Rollwiderstand benötigt, der dann gegeben ist, wenn im Vulkanisat ein hoher Wert für die Rückprallelastizität bei 60°C sowie ein niedriger tanδ-Werte in der dynamischen Dämpfung bei hoher Temperatur (60°C) und ein niedriges tan δ-Maximum im Amplitudensweep gemessen werden. Wie aus Tabelle 2 ersichtlich, zeichnet sich das Vulkanisat des erfindungsgemäßen Beispiels 3b durch eine hohe Rückprallelastizität bei 60°C, einen niedrigen tanδ-Wert in der dynamischen Dämpfung bei 60°C sowie ein niedriges tan δ-Maximum im Amplitudensweep aus.

Für Reifenanwendungen wird zudem eine hohe Nassrutschfestigkeit benötigt, die dann gegeben ist, wenn das Vulkanisat einen hohen tanδ-Wert in der dynamischen Dämpfung bei tiefer Temperatur (0°C) aufweist. Wie aus Tabelle 2 ersichtlich, zeichnet sich das Vulkanisat des erfindungsgemäßen Beispiels 3b durch einen hohen tanδ-Wert in der dynamischen Dämpfung bei 0°C aus.

Des Weiteren ist für Reifenanwendungen eine hohe Abriebfestigkeit notwendig. Wie aus Tabelle 2 ersichtlich, zeichnet sich das Vulkanisat des erfindungsgemäßen Beispiels 3b durch einen geringen DIN-Abrieb aus.

## Patentansprüche

1. Verfahren zur Herstellung von Endgruppen funktionalisierten Polymeren, **dadurch gekennzeichnet, dass** ein oder mehrere Bis(trialkylsilyl)peroxide (Funktionalisierungsreagenzien)nach der allgemeinen Formel (II) 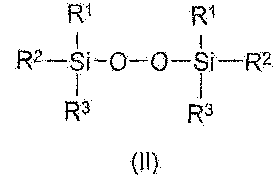 wobei
R¹, R², R³ gleich oder verschieden sein können und Alkyl-, Cycloalkyl- und Aralkylreste darstellen, die Heteroatome wie O, N, S, Si enthalten können,
als Reinstoff, Lösung oder Suspension zu Polymeren mit reaktiven Polymerkettenenden zugegeben werden,
wobei das Polymer ein Polybutadien, ein Butadien-Isopren-Copolymer, ein Butadien-Styrol-Copolymer, ein Isopren-Styrol-Copolymer oder ein Butadien-Isopren-Styrol-Terpolymer ist.

2. Verfahren nach Anspruch 1 **dadurch gekennzeichnet, dass** die Zugabe der Funktionalisierungsreagenzien nach Abschluss der Polymerisation erfolgt.

3. Verfahren nach Anspruch 1 **dadurch gekennzeichnet, dass** ein Überschuss an Funktionalisierungsreagenzien eingesetzt wird.

4. Verfahren nach Anspruch 1 **dadurch gekennzeichnet, dass** stöchiometrische Mengen oder ein Unterschuss an Funktionalisierungsreagenzien eingesetzt wird.

5. Verfahren nach Anspruch 2, 3 oder 4 **dadurch gekennzeichnet, dass** die Menge an Funktionalisierungsreagenzien zwischen 0,005 - 2 Gew.-%, bevorzugt zwischen 0,01 - 1 Gew.-%, bezogen auf die Menge an Polymer mit reaktiven Polymerkettenenden, liegt.

6. Verfahren nach einem der vorgenannten Ansprüche, **dadurch gekennzeichnet, dass** Kopplungsreagenzien, wobei diese aus Siliciumtetrachlorid, Methyltrichlorsilan, Dimethyldichlorsilan, Zinntetrachlorid, Dibutylzinndichlorid, Tetraalkoxysilane, Ethylenglykoldiglycidylether oder 1,2,4-Tris(chlormethyl)benzol ausgewählt sind, zur Umsetzung mit den reaktiven Polymerkettenenden zugesetzt werden.

## Claims

1. Process for producing polymers functionalized by terminal groups, **characterized in that** one or more bis(trialkylsilyl) peroxides (functionalization reagents) according to the general formula (II) 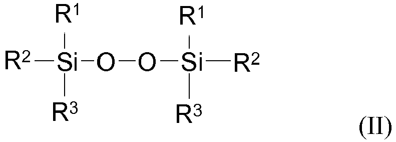 where
R¹, R², and R³ can be identical or different and are alkyl, cycloalkyl, and aralkyl moieties which can comprise heteroatoms such as O, N, S, and Si,
are added in the form of pure substance, solution or suspension to polymers having reactive polymer chain ends,
wherein the polymer is a polybutadiene, a butadiene-isoprene copolymer, a butadiene-styrene copolymer, an isoprene-styrene copolymer or a butadiene-isoprene-styrene terpolymer.

2. Process according to Claim 1, **characterized in that** the addition of the functionalization reagents takes place after conclusion of the polymerization process.

3. Process according to Claim 1, **characterized in that** an excess of functionalization reagents is used.

4. Process according to Claim 1, **characterized in that** stoichiometric amounts or a sub-stoichiometric amount of functionalization reagents is used.

5. Process according to Claim 2, 3 or 4, **characterized in that** the amount of functionalization reagents is from 0.005 - 2% by weight, preferably from 0.01 - 1% by weight, based on the amount of polymer having reactive polymer chain ends.

6. Process according to any of the preceding claims, **characterized in that** coupling reagents, wherein these are selected from silicon tetrachloride, methyltrichlorosilane, dimethyldichlorosilane, tin tetrachloride, dibutyltin dichloride, tetraalkoxysilanes, ethylene glycol diglycidyl ether and 1, 2, 4-tris(chloromethyl)-benzene, are added for the reaction with the reactive polymer chain ends.

## Revendications

1. Procédé de fabrication de polymères fonctionnalisés par des groupes terminaux, **caractérisé en ce qu'**un ou plusieurs bis(trialkylsilyl)peroxydes (réactifs de fonctionnalisation) de formule générale (II) 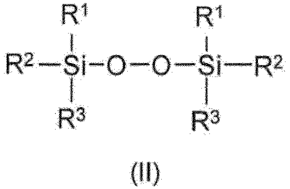 dans laquelle
R¹, R², R³ peuvent être identiques ou différents, et représentent des radicaux alkyle, cycloalkyle et aralkyle, qui peuvent contenir des hétéroatomes tels qu'O, N, S, Si,
sont ajoutés sous la forme d'une substance pure, d'une solution ou d'une suspension à des polymères contenant des extrémités de chaînes polymères réactives,
le polymère étant un polybutadiène, un copolymère de butadiène-isoprène, un copolymère de butadiène-styrène, un copolymère d'isoprène-styrène ou un terpolymère de butadiène-isoprène-styrène.

2. Procédé selon la revendication 1, **caractérisé en ce que** l'ajout des réactifs de fonctionnalisation a lieu après la fin de la polymérisation.

3. Procédé selon la revendication 1, **caractérisé en ce qu'**un excès de réactifs de fonctionnalisation est utilisé.

4. Procédé selon la revendication 1, **caractérisé en ce que** des quantités stoechiométriques ou un déficit de réactifs de fonctionnalisation sont utilisés.

5. Procédé selon la revendication 2, 3 ou 4, **caractérisé en ce que** la quantité de réactifs de fonctionnalisation est comprise entre 0,005 et 2 % en poids, de préférence entre 0,01 et 1 % en poids, par rapport à la quantité de polymère contenant des extrémités de chaînes polymères réactives.

6. Procédé selon l'une quelconque des revendications précédentes, **caractérisé en ce que** des réactifs de couplage, choisis parmi le tétrachlorure de silicium, le méthyltrichlorosilane, le diméthyldichlorosilane, le tétrachlorure d'étain, le dichlorure de dibutylétain, les tétraalcoxysilanes, l'éther diglycidylique d'éthylène glycol ou le 1,2,4-tris(chlorométhyl)benzène, sont ajoutés pour la réaction avec les extrémités de chaînes polymères réactives.
